# EUROPEAN PATENT APPLICATION

(11) **EP 4 613 498 A1**
(43) Date of publication of application: **10.09.2025**
(21) Application number: 25153827.8
(22) Date of filing: 24.01.2025
(51) Int. Cl.: B42D 15/02, B42D 25/328, B42D 25/387

(54) **METHOD FOR MANUFACTURING TRADING CARD WITH IMPROVED SURFACE CHARACTERISTICS AND TRADING CARD MANUFACTURED BY THE METHOD**

(30) Priority: 06.03.2024 KR 20240032122
(71) Applicant: Bogeun Co.. Ltd., Gyeongsan-si, Gyeongsangbuk-do 38696 (KR)
(72) Inventor: Hong, Dong Wan, 42170 Daegu (KR); Ahn, Sung Jong, 38508 Gyeongsangbuk-do (KR)
(74) Representative: RGTH

(57) **Abstract**

A method for manufacturing a trading card with improved surface characteristics, comprising: a step 1 of supplying a trading card having a UV varnish coating layer formed thereon; a step 2 of printing and applying UV varnish on upper part of the UV varnish coating layer; a step 3 of attaching a UV casting film on upper part of the trading card having the UV varnish applied thereon; a step 4 of curing the UV varnish using a UV lamp; a step 5 of peeling the UV casting film.

## Description

### Technical Field

The present disclosure relates to a method for manufacturing a trading card with improved surface characteristics and a trading card manufactured by the method. In particular, the present disclosure relates to a method for manufacturing a trading card to which a holographic effect is applied using UV transfer coating and which has a thick UV coating layer, no bubbles and excellent gloss, and a trading card manufactured by the method.

### Background Art

A trading card game is a game that uses a 'trading card' designed based on a specific theme or rule. Each trading card has mutually related contents printed on both sides thereof. For example, if a picture of a character is printed on the front side of the card, a content describing the character is printed on the back side thereof. Such trading cards themselves can become the object of collection.

The trading cards are sold in the form of randomly having packaged a certain number of cards among the cards that make up a specific series. For example, two or three trading cards are distributed in an opaque vinyl wrapper. Individuals who own duplicate cards can obtain various types of cards by exchanging them with other users.

Meanwhile, a variety of special coatings are applied to the trading cards to enhance durability for protection, increase visual appeal and provide a luxurious feel, thereby providing more enjoyment to collectors and players.

These special coatings include a gloss coating which gives the card surface a shiny and glossy appearance to enhance the vividness of colors and graphics, a matte coating which helps reduce reflection and prevent dust and fingerprints from being pressed down and provides a casual and sophisticated feel, a foil stamping which applies metallic foil to specific areas to create a flashy and luxurious appearance, a spot UV varnish which emphasizes images or text and adds depth and dimension by applying a glossy coating to specific areas, a soft touch coating which provides a velvety surface to enhance the texture and grip of the card, a UV coating which provides a protective layer to prevent a discoloration due to exposure to light, scratches and damages, an embossing/debossing which creates high or low areas on the card surface to emphasize images or texts, holographic effects which provide a glittering effect at various angles to enhance the visual appeal of the card, and so on

Among the above-mentioned special coatings, a method using a UV casting film having a holographic pattern formed on the surface is widely used as a method for imparting a holographic effect.

The method includes applying or printing a UV varnish (ink) on one side or both sides of a trading card, attaching a UV casting film to one side or both sides of the trading card on which the ink has been applied or printed, irradiating UV to one side or both sides of the trading card to which the UV casting film has been attached, for a preset period of time to cure the UV varnish, and then separating the UV casting film.

That is, a holographic pattern corresponding to the holographic pattern formed on the UV casting film is formed on the UV varnish that has been coated and cured on the trading card, thereby imparting a holographic effect to the trading card.

However, since the UV varnish coating layer is formed as a very thin film, the UV varnish is not uniformly applied to the trading card depending on the surface condition of the trading card, i.e., printing condition, surface tension, etc. As a result, there are problems that an area where the UV varnish has not been applied occurs in a very small part of the surface of the trading card or bubbles are formed in the UV varnish, and the durability of the UV varnish coating layer is weak.

Such uneven coating of the UV varnish and the formation of bubbles significantly deteriorate the appearance of the trading card and the thin UV varnish coating layer reduces the durability thereof, and therefore, a solution is required to solve such problems.

The present disclosure has been created to solve the above problems, and seeks to provide a method for manufacturing a trading card having excellent gloss and adhesive strength while minimizing the occurrence of bubbles and increasing gloss and improving the appearance, by forming a thick UV varnish coating layer using a UV transfer coating device, and a trading card having the improved appearance.

### Summary of the Disclosure

The present disclosure provides a method for manufacturing a trading card with improved surface characteristics, comprising a step 1 of supplying a trading card having a UV varnish coating layer formed thereon; a step 2 of printing and applying UV varnish on the upper part of the UV varnish coating layer; a step 3 of attaching a UV casting film on the upper part of the trading card having the UV varnish applied thereon; a step 4 of curing the UV varnish using a UV lamp; and a step 5 of peeling off the UV casting film.

The method for manufacturing a trading card with improved surface characteristics according to the present disclosure can increase the thickness of the UV varnish coating layer by forming a UV varnish coating layer again on the UV varnish coating layer to thereby increase the gloss of the surface, and can also remove bubbles in the UV varnish coating layer.

In the method for manufacturing a trading card with improved surface characteristics according to the present disclosure, the trading card having the UV varnish coating layer formed thereon may be manufactured by a method comprising a step 1-1 of supplying a trading card; a step 2-1 of printing and applying a UV varnish on the upper part of the trading card; a step 3-1 of attaching a UV casting film on the upper part of the trading card to which the UV varnish has been applied; a step 4-1 of curing the UV varnish using a UV lamp; and a step 5-1 of peeling off the UV casting film.

The method for manufacturing a trading card with improved surface characteristics according to the present disclosure can easily increase the thickness of the UV varnish coating layer using a conventional UV varnish transfer device.

In the method for manufacturing a trading card with improved surface characteristics according to the present disclosure, it is preferable that the UV lamp output in the step 4-1 is 2 to 3kW, and the UV lamp output in the step 4 is adjusted to 2 to 5kW. If the UV lamp output exceeds the above range, the adhesive force between the UV varnish coating layer and the trading card is reduced, and the strength of the UV varnish coating layer is weakened.

In the method for manufacturing trading cards with improved surface characteristics according to the present disclosure, the step 2 of printing and applying UV varnish on the upper part of the UV varnish coating layer and the step 2-1 of printing and applying UV varnish on the upper part of the trading card may further include a step of supplying UV varnish, and it is preferable that the UV varnish is supplied at a temperature of 40 to 50°C. If the temperature of the UV varnish is not supplied consistently, it is difficult to remove the bubbles and the UV varnish is difficult to be uniformly applied to the trading card.

In the method for manufacturing trading cards with improved surface characteristics according to the present disclosure, it is preferable that the UV casting film in the step 3 and the step 3-1 of attaching the UV casting film to the upper part of the trading card, to which the UV varnish has been applied, is subjected to static electricity removal by a de-static device and its surface is cleaned by an air cleaner, before being attached to the upper part of the trading card. If static electricity and/or dust are not removed from the UV casting film, the UV varnish coating layer is not uniformly formed.

In the method for manufacturing a trading card with improved surface characteristics according to the present disclosure, the step 2 of printing and applying UV varnish on the upper part of the UV varnish coating layer and the step 2-1 of printing and applying UV varnish on the upper part of the trading card may include printing and applying UV varnish on a part of the trading card using a flexo plate including a concave part and a convex part, and it is preferable that the convex part has a size of 99 to 99.5% of a size corresponding to a part of the trading card. If the convex part of the flexo plate exceeds the above range, a hologram pattern larger than an actual desired shape is formed, and if it is less than the above range, a hologram pattern smaller than the desired shape is formed. Resultantly, the border between the content printed on the trading card and the hologram pattern does not exactly match and therefore, the aesthetic sensibility of the trading card deteriorates. Further, when a hologram pattern is applied to only a part of the trading card using the flexo plate, various design effects can be given depending on the character, background, etc. printed on the trading card due to the contrast effect between the part where the hologram pattern has not been printed and the part where the hologram pattern has been printed, and the hologram effect can be further enhanced because the gloss increases when UV varnish is coated and cured twice.

The present disclosure provides a trading card with improved surface characteristics manufactured by the method for manufacturing a trading card with improved surface characteristics described above.

By using the method for manufacturing a trading card with improved surface characteristics according to the present disclosure, a trading card having excellent gloss and a clean surface state without bubbles can be manufactured, thereby enabling the gentrification of the trading card.

### Brief Description of the Drawings

FIG. 1 illustrates a process of one embodiment of a method of manufacturing a trading card with improved surface characteristics according to the present disclosure.
Fig. 2 illustrates a photograph of the surface of a trading card, (a) shows a case where the UV varnish has been coated once in which the circle indicates a part where bubbles have been occurred, and (b) shows a case where the UV varnish has been coated twice in which almost no bubbles are found.
Fig. 3 illustrates a case where the UV varnish coating layer has been completely peeled off under the evaluation of adhesion after the UV varnish has been coated twice.
Fig. 4 illustrates cases where (a) the coating layer has been partially destroyed and (b) the coating layer has been completely destroyed, under the evaluation of pencil strength after UV varnish has been coated twice.
Fig. 5 illustrates a trading card in which a part (A) without a hologram pattern printed and a part (B) with a hologram pattern printed are separated using a flexographic plate having concave and convex parts formed thereon.

### Detailed Description of the Disclosure

The present disclosure will be described in detail with reference to the drawings below. However, these drawings are for illustrative purposes only, and the present disclosure is not limited thereto.

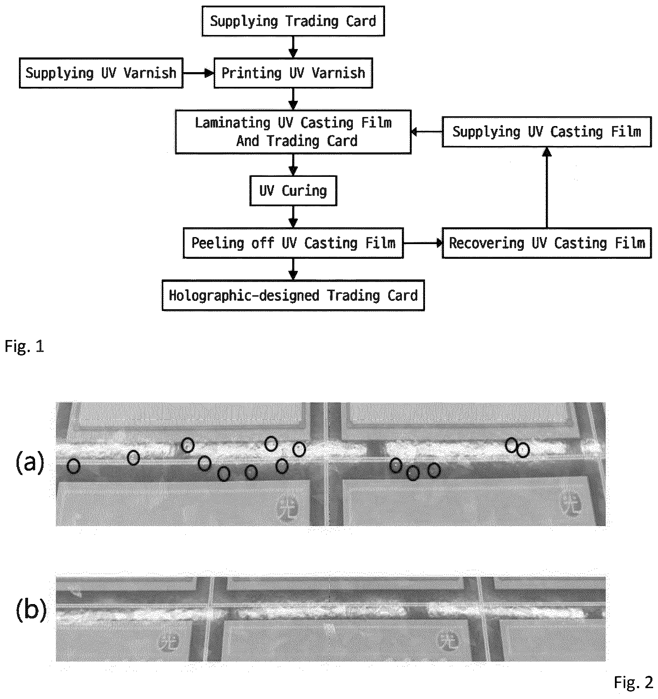

FIG. 1 illustrates a process of one embodiment of a method of manufacturing a trading card with improved surface characteristics according to the present disclosure.

The trading card is continuously supplied to a UV varnish printing device in the form of a sheet or roll on which a plurality of trading cards are printed.

The printing of the UV varnish can be performed by a printing roller, and the UV varnish is printed and applied to the entire of one surface of the trading card or a part of the trading card.

A UV casting film having a hologram pattern formed thereon is continuously supplied and attached to the upper part of the trading card on which the UV varnish has been printed and applied, and then combined with the trading card.

The trading card having the UV casting film attached thereto is fed into a curing device equipped with a UV lamp, and the UV varnish is cured by UV and attached to the trading card.

After passing through the curing device, the UV casting film is peeled off from the trading card, and then the UV casting film is wound up so that it can be reused.

After the UV casting film is peeled off, a cured UV varnish coating layer remains on the upper part of the trading card while having a pattern corresponding to the hologram pattern formed on the UV casting film, and the trading card exhibits a hologram effect.

The method for manufacturing a trading card with improved surface characteristics according to the present disclosure can manufacture a trading card by supplying a trading card at a speed of 35 to 40m per minute, printing a UV varnish at the speed, attaching a UV casting film, curing and coating the UV varnish, and peeling off the UV casting film.

In the method for manufacturing a trading card with improved surface characteristics according to the present disclosure, a UV lamp of a curing device equipped with the above-mentioned UV lamp may be used as one that has a maximum output of 8kW, and the maximum output of the UV lamp may be controlled using a stabilizer.

The distance between the UV lamp and the trading card may be controlled to be 6 to 8cm.

Hereinafter, an embodiment of the method for manufacturing a trading card with improved surface characteristics according to the present disclosure will be described.

While supplying the trading card at a speed of 36m per minute, the UV varnish has been printed and applied to the entire upper part of the trading card using a flexo printing method and a plate cylinder without uneven surface. A UV casting film has been attached to the upper part of the trading card, the UV varnish has been cured using a UV lamp, and the UV casting film has been peeled off to thereby manufacture the trading card. The UV lamp having a maximum output of 8kW has been used, and the output has been adjusted using a stabilizer. During UV curing, the distance between the UV lamp and the trading card to which the UV casting film has been attached is set to 7cm.

Using the method, the UV varnish has been coated and cured once or twice while adjusting the output of the UV lamp as shown in Table 1 below, and then the results of evaluating the degree of occurrence of bubbles, gloss, adhesion of the varnish coating layer and strength of the coating layer of the trading card are also shown in Table 1.

The degree of occurrence of the bubbles has been evaluated by converting the frequency of bubbles that can be identified by visual observation into a score, and the case with the highest frequency of occurrence of the bubbles has been evaluated as 10, and the case without the bubbles has been evaluated as 0.

The gloss of the UV varnish coating layer is measured using a HORIBA IG-340 gloss meter, and the adhesive strength of the coating layer is evaluated as 'O' in case that there is no abnormality in the UV varnish coating layer after the adhesive tape is adhered to the UV varnish coating layer and then the adhesive tape is peeled off, '△' in case that a part thereof is peeled off, and `X' in case that the entire thereof is peeled off.

The evaluation of the strength of the coating layer is performed by scratching the UV varnish coating layer at a 45-degree angle using a 3H pencil with a hardness similar to a fingernail. As the results of scratching, if there is no abnormality in the coating layer, the strength is evaluated as '○', if the coating layer is partially destroyed, the strength is evaluated as '△', and if the coating layer is completely destroyed, the strength is evaluated as '□'.

**[Table 1]**

| Example | UV lamp output When one coating | Whether two coatings or UV lamp output | Degree of occurrence of bubbles | Gloss | Adhesion | strength |
|---|---|---|---|---|---|---|
| 1 | 2.5kW | No two coatings | 10 | 74.5 | ○ | ○ |
| 2 | | 2.5kW | 2 | 78 | ○ | ○ |
| 3 | | 4.0kW | 2 | 78 | ○ | ○ |
| 4 | | 5.5kW | 2 | 78 | Δ | ○ |
| 5 | | 7.0kW | 2 | 77.5 | Δ | ○ |
| 6 | 4.0kW | No two coatings | 10 | 74.5 | ○ | ○ |
| 7 | | 2.5kW | 2 | 77.5 | Δ | ○ |
| 8 | | 4.0kW | 2 | 77.5 | Δ | ○ |
| 9 | | 5.5kW | 2 | 78 | Δ | ○ |
| 10 | | 7.0kW | 2 | 78 | Δ | ○ |
| 11 | 5.5kW | No two coatings | 10 | 75 | ○ | ○ |
| 12 | | 2.5kW | 2 | 78 | X | Δ |
| 13 | | 4.0kW | 2 | 77.5 | X | Δ |
| 14 | | 5.5kW | 2 | 78 | X | Δ |
| 15 | | 7.0kW | 2 | 78 | X | Δ |
| 16 | 7.0kW | No two coatings | 10 | 73.5 | ○ | ○ |
| 17 | | 2.5kW | 2 | 78 | X | X |
| 18 | | 4.0kW | 2 | 78 | X | X |
| 19 | | 5.5kW | 2 | 78 | X | X |
| 20 | | 7.0kW | 2 | 77 | X | X |

In the Table 1, Examples 1, 6, 11 and 16 indicate cases where the UV varnish is printed and then the outputs of the UV lamp are set to 2.5, 4.0, 5.5 and 7.0kW, respectively, in order to cure the UV varnish, and Examples 2-5, 7-10, 12-15 and 17-20 indicate cases where the UV varnish is printed again on the trading card coated with UV varnish manufactured according to Examples 1, 6, 11 and 16, respectively, and then the UV varnish is cured again under different UV lamp outputs.

That is, Example 2 indicates a case where a trading card coated and cured with UV varnish using a 2.5kW UV lamp according to Example 1 is manufactured, and then UV varnish is printed on the trading card again and cured again using a 2.5 kW UV lamp. Examples 3 to 5, indicate cases where the UV vanish is cured again using outputs 4.0, 5.5 and 7.0kW of the UV lamp, respectively.

In the case of Examples 7 to 10, 12 to 15 and 17 to 20 are the same as above except that only the output value of the UV lamp used for one coating is different.

As shown in Table 1, in the case where the UV varnish is coated once, it can be seen that many bubbles are generated in the UV varnish and resultantly the condition of its surface condition is not good. (See Examples 1, 6, 11, 16 and FIG. 2(a)) However, the adhesion and strength of the UV varnish coating layer are both good.

As seen in Examples 2 to 5 and 7 to 10, it can be seen that when UV varnish is coated twice, the bubbles in the UV varnish coating layer are significantly reduced, and the condition of its surface condition is improved (see Fig. 2(b) and the gloss of the trading card increases.

In terms of adhesion and strength, there is a case where a good level is maintained even after two coatings (see Examples 2 and 3), but in a case where the output of the UV lamp is above a certain level, the adhesion is somewhat reduced (see Examples 4, 5, 7 to 10).

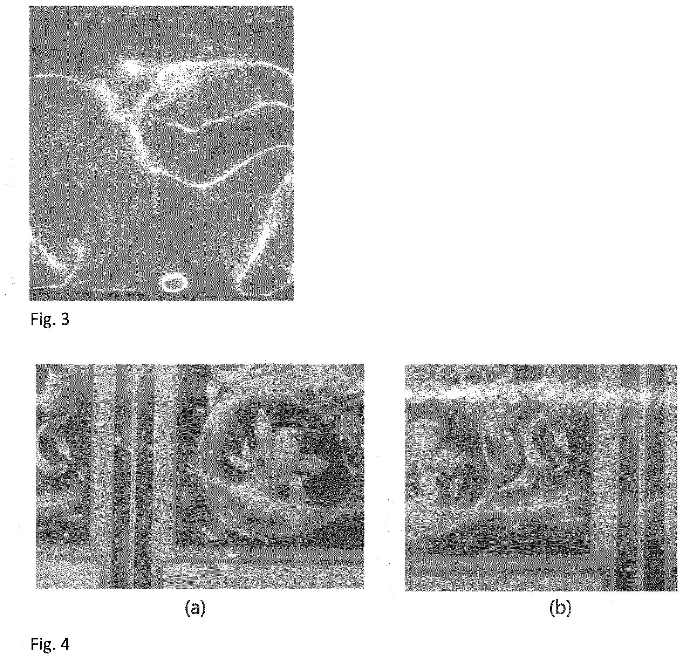

Looking at the case where a UV lamp output of 5.5 kW or more is used during one coating, such as Examples 12 to 15 and 17 to 20, the UV varnish is coated twice as in the case of Examples 2 to 5 and 7 to 10. The bubbles in the varnish coating layer are significantly reduced, improving the surface condition and increasing the gloss of the trading card, but the adhesion is greatly reduced, leading to complete peeling of the UV varnish coating layer (Example 12 to 15, 17 to 20, see Figure 3) and the strength is also decreased. Resultantly, the coating layer is partially destroyed by the pencil (Examples 12 to 15, see Figure 4(a)) or completely destroyed (see Examples 17-20 and Figure 4(b)).

As shown in the above Examples, when UV varnish is coated and cured once, the trading card and the UV varnish coating layer can have good adhesion and strength, but many bubbles are generated in the UV varnish, so the condition of surface is not good.

However, when UV varnish is coated and cured twice, the gloss of the trading card increases and the bubbles in the UV varnish coating are significantly reduced, so the surface condition is improved. However, it can be seen that the adhesion and strength of the UV varnish coating layer are greatly dependent on the output of the UV lamp used for UV varnish curing.

That is, it can be seen that in case where the UV lamp output is 2~3kW for the first curing and the UV lamp output is 2~5kW for the second curing, the bubbles are reduced, the surface condition is improved and the gloss is improved, thereby forming a UV varnish coating layer with good adhesion and strength.

It is believed that this is because the UV varnish is coated repeatedly and thus the UV varnish is applied again on upper part of the UV varnish coating formed for the first curing, so the holographic pattern formed for the first curing disappears and the thickness of the UV varnish coating layer is doubled, thereby improving the gloss of the surface, but when the output of the UV lamp is above a certain level, the first applied UV varnish is excessively cured, which reduces the strength of the UV varnish coating layer and weakens the interfacial adhesion between the trading card and the UV varnish.

Although the reduction in bubbles cannot be explained theoretically, this is because the effect of the first-coated UV varnish is complexly acted together with the change in the surface of the trading card due to the first UV irradiation.

Therefore, the method for manufacturing a trading card with improved surface characteristics according to the present disclosure provides a trading card with excellent gloss and a clean surface state without bubbles, thereby enabling the enhancement of the trading card.

Hereinafter, other aspects of the method for manufacturing a trading card with improved surface characteristics according to the present disclosure will be described.

The UV varnish used in the present disclosure can be printed and applied to a trading card by in a manner of flexography. The UV varnish is transferred from a varnish tray to a plate cylinder using a fountain roller and an anilox roller, and the varnish of the plate cylinder is printed or applied to the upper part of the trading card passing between the plate cylinder and the impression cylinder.

If the plate cylinder has no unevenness, the UV varnish is printed and applied over the entire surface of the trading card, so that a holographic pattern designed on the UV casting film is formed over the entire surface of the trading card.

If the hologram design needs to be applied only to a part of the trading card, a flexo plate (resin plate) having the concave and convex parts formed thereon is mounted on the flat plate, and only the UV varnish shifted to the convex part of the flexo plate is transferred to the trading card, so that a hologram pattern can be imprinted only on a part of the trading card.

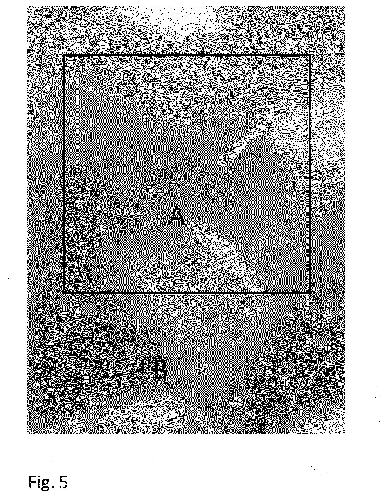

As described above, if a hologram pattern is applied only to a part of the trading card, the contrast effect between the part where the hologram pattern has not been printed (part A of FIG. 5) and the part where the hologram pattern has been printed (part B of FIG. 5) has the advantage of allowing various design effects to be applied depending on the characters, backgrounds, etc. printed on the trading card. In particular, when the UV varnish is coated and cured twice as described above, the gloss increases, so the holographic effect can be further enhanced.

The convex part of the flexo plate has a size of preferably 99 to 99.5%, more preferably 99.1 to 99.3%, of the size of the holographic design shape desired to be printed on the trading card (e.g., part B in Figure 5). This is in consideration of the effect of the UV varnish spreading onto the surface of the trading card due to the pressure of the impression cylinder and the UV casting film, and is intended to ensure that the area where the hologram pattern is applied and area where it is not applied are clearly located on the printed content of the trading card. That is, if the convex part of the flexo plate exceeds the above range, a hologram pattern larger than the actual desired shape is formed, and if it is less than the above range, a hologram pattern smaller than the desired shape is formed, so that the boundary between the content printed on the trading card and the hologram pattern does not exactly match, resulting in a deterioration in the aesthetic sensibility of the trading card.

The UV varnish used in the present disclosure can be maintained and supplied at a constant temperature. That is, the temperature of the UV varnish held in the above tray is preferably 40 to 50°C, and since the UV varnish is supplied at a constant temperature, the occurrence of bubbles is reduced, and the UV varnish can be printed and applied uniformly on one side of the trading card, and especially, when the UV varnish is coated only on a part of the trading card using a flexo plate, the part where the hologram pattern has not been printed (part A of FIG. 5) and the part where the hologram pattern has been printed (part B of FIG. 5) can be printed to be clearly distinguished.

The UV casting film used in the present disclosure have static electricity removed by a static electricity removing device such as an ionizer before being attached to a trading card on which UV varnish has been printed or applied. By removing the static electricity, the adhesion to the trading card is improved and thus the hologram design can be clearly imprinted on the UV varnish. The static electricity removing device such as the ionizer can be applied to both sides of the UV casting film, but in order to simplify the process, it can be applied only to one side of the UV casting film attached to the trading card.

In addition, it is preferable to remove foreign substances such as dust on the surface of the UV casting film used in the present disclosure using an air cleaner before attaching the film to the trading card on which UV varnish is printed or applied. The air cleaner is applied after removing static electricity by a static electricity removing device such as an ionizer, thereby effectively removing foreign substances such as dust.

## Claims

1. A method for manufacturing a trading card with improved surface characteristics, comprising:
a step 1 of supplying a trading card having a UV varnish coating layer formed thereon;
a step 2 of printing and applying UV varnish on upper part of the UV varnish coating layer;
a step 3 of attaching a UV casting film on upper part of the trading card having the UV varnish applied thereon;
a step 4 of curing the UV varnish using a UV lamp;
a step 5 of peeling the UV casting film;

2. The method according to Claim 1, wherein the trading card having the UV varnish coating layer formed thereon is manufactured by a method comprising:
a step 1-1 of supplying a trading card;
a step 2-1 of printing and applying UV varnish on the upper part of the trading card;
a step 3-1 of attaching a UV casting film on upper part of the trading card having the UV varnish applied thereon;
a step 4-1 of curing the UV varnish using a UV lamp; and
a step 5-1 of peeling off the UV casting film.

3. The method according to Claim 2, wherein the UV lamp output in the step 4 is 2 to 5kW, and the UV lamp output in the step 4-1 is 2 to 3kW.

4. The method according to Claim 2, wherein the step 2 of printing and applying UV varnish on the upper part of the UV varnish coating layer and the step 2-1 of printing and applying UV varnish on the upper part of the trading card further include a step of supplying UV varnish, and the UV varnish is supplied at a temperature of 40 to 50°C.

5. The method according to Claim 2, wherein the UV casting film in the step 3 and the step 3-1 of attaching the UV casting film to the upper part of the trading card, to which the UV varnish has been applied, is subjected to static electricity removal by a de-static device and its surface is cleaned by an air cleaner, before being attached to the upper part of the trading card.

6. The method according to Claim 2, wherein the step 2 of printing and applying UV varnish on the upper part of the UV varnish coating layer and the step 2-1 of printing and applying UV varnish on the upper part of the trading card include printing and applying UV varnish on a part of the trading card using a flexo plate including a concave part and a convex part, and the convex part has a size of 99 to 99.5% of a size corresponding to a part of the trading card.

7. A trading card with improved surface characteristics manufactured by the method according to any one of Claims 1 to 6
